Europäisches Patentamt

European Patent Office

Office européen des brevets

(19)

(11) Publication number: **0 172 961**
**B1**

## EUROPEAN PATENT SPECIFICATION

(12)

(45) Date of publication of patent specification: **19.10.88**

(51) Int. Cl.⁴: **C 08 F 10/08**, C 08 F 4/64

(21) Application number: 84305929.6

(22) Date of filing: 30.08.84

(54) **1-Butene polymer and its use.**

| | |
|---|---|
| (43) Date of publication of application:<br>05.03.86 Bulletin 86/10 | (73) Proprietor: **MITSUI PETROCHEMICAL INDUSTRIES, LTD.**<br>2-5, Kasumigaseki 3-chome Chiyoda-ku Tokyo 100 (JP) |
| (45) Publication of the grant of the patent:<br>19.10.88 Bulletin 88/42 | (72) Inventor: **Kohyama, Masaki**<br>2-5, Misono 1-chome<br>Ohtake-shi Hiroshima-ken (JP)<br>Inventor: **Tgarashi, Chikara**<br>13-7, Minamisakae 2-chome<br>Ohtake-shi Hiroshima-ken (JP)<br>Inventor: **Fukui, Kunisuke**<br>2-5, Misono 1-chome<br>Ohtake-shi Hiroshima-ken (JP) |
| (84) Designated Contracting States:<br>AT DE FR GB IT NL | |
| (56) References cited:<br>GB-A-2 111 066 | |
| | (74) Representative: **Myerscough, Philip Boyd et al**<br>J.A.Kemp & Co. 14, South Square Gray's Inn London, WC1R 5EU (GB) |

Courier Press, Leamington Spa, England.

## Description

This invention relates to a 1-butene polymer which has high rigidity, excellent creep resistance, excellent impact strength and a high crystal transition speed and exhibits its excellent improved properties as a shaped article, particularly a shaped article in the form of a pipe structure, and to its use.

Metallic pipes such as Zinc-plated steel pipes, copper pipes or lead pipes have been used as water supplying pipes. These metallic pipes, however, have some defects, and new piping materials free from these defects have been desired. So far, plastic pipes such as pipes of polyvinyl chloride, polyethylene and poly-1-butene free from pinhole formation owing to rust or electrolytic corrosion have gained some acceptance.

Because of its excellent pressure-resisting strength, creep resistance to internal pressures at high temperatures, abrasion resistances, and excellent flexibility, a 1-butene polymer is among those preferred synthetic resins for use as a material for water supplying pipes.

Shaped articles, particularly in the form of a pipe structure, of the 1-butene polymer are required to be further improved in mechanical strengths such as rigidity, creep characteristics and impact strength.

It is known that when solidified from its molten state, the 1-butene polymer initially assumes a pseudostable II type (tetragonal system modification), and then slowly passes into a stable I type (hexagonal system modification) over several days. In the state of the II type, shaped article of the 1-butene polymer is soft. If, therefore, the shaped article undergoes deformation by transportation or otherwise while it is of the II type and is transformed in to this state to the I type, the deformation remains in the article to make it valueless as a commercial product. Accordingly, the handling of the shaped article before complete transition to the I type is troublesome, and much expertise and labor are spent in trying to prevent such undesirable deformation.

Attempts have been made to increase the crystal transition speed of the 1-butene polymer. For example, it was proposed to shorten the time required for crystal transition by modifying the molding method (see, for example, JP—A—42-92/1972), or to achieve it by using additives (see, for example JP—A—36140/1982 and JP—A—92038/1982). None has yet been able to achieve an industrially satisfactory improvement.

GB—A—2111066 describes catalyst systems for use in the polymerisation of olefins including 1-butene. The systems comprise a solid titanium catalyst component containing magnesium, titanium, halogen and an ester of a polycarboxylic acid or a polyhydroxy compound, in the preparation of which component there is used an electron donor which can be, inter alia, an organic silicon compound having an Si—O—C bond. These catalyst systems are said to be highly active and to yield highly stereospecific polymers.

From a different standpoint from prior attempts to use additional means or additives, we have made investigations to provide a new 1-butene polymer which has high rigidy, excellent creep resistance characteristics, and excellent impact strength and a higher crystal transition speed.

According to this invention, there is provided a 1-butene polymer containing 0 to 1 mole % of an olefin with 2 to 20 carbon atoms other than 1-butene and having

(1) an intrinsic viscosity [$\eta$] of from 1.5 to 4.0 dl/g as measured in decalin at 135°C,

(2) a molecular weight distribution, expressed by the ratio of its weight average molecular weight ($\bar{M}w$) to its number average molecular weight ($\bar{M}n$), of not more than 6, and

(3) an isotacticity value of at least 95%.

The 1-butene polymer having characteristics (1) to (3) overcomes the aforesaid technical problem, exhibits high rigidity, excellent creep resistance characteristics, excellent impact strength and an increased crystal transition speed and gives a shaped article, particularly in the form of a pipe structure, having excellent properties.

The 1-butene polymer in accordance with this invention may contain up to 1 mole % of an olefin having 2 to 20 carbon atoms other than 1-butene. Examples of such an olefin are ethylene, propylene, 1-pentene, 1-octene, 1-decene, 1-dodecene, 1-octadecene and 4-methylpentene.

The 1-butene polymer of the invention has an intrinsic viscosity [$\eta$] as measured in decalin at 135°C of from 1.5 to 4.0 dl/g, preferably from 2 to 3.5 dl/g, [characteristic (1)]. If the intrinsic viscosity is too low beyond the specified range, the creep resistance characteristics and impact strength of the polymer are deteriorated. If it is too high beyond the specified range, the polymer has inferior moldability. Moreover, the crystal transition speed of the polymer becomes unsatisfactorily low. Hence, the intrinsic viscosity of the polymer should be within the specified range.

The 1-butene polymer of this invention has a molecular weight distribution, expressed by the ratio of its weight average molecular weight ($\bar{M}n$) to its number average molecular weight ($\bar{M}n$), i.e. $\bar{M}w/\bar{M}n$, of not more than 6, preferably from 2 to 6, more preferably from 3.3 to 5.5, [characteristic (2)]. If its molecular weight distribution exceeds the upper limit specified, the polymer has inferior impact strength. Hence, the molecular weight distribution should be not more than 6.

Furthermore, the 1-butene polymer of this invention has an isotacticity value of at least 95%, preferably at least 95.5%, more preferably 95.5 to 99%, [characteristic (3)]. If the isotacticity value of the polymer is less than 95%, the polymer has inferior rigidity and an unsatisfactorily low crystal transition speed. Hence, the polymer should meet the above isotacticity value condition.

2

**0 172 961**

The $\overline{M}w/\overline{M}n$ is determined in the following manner.

(1) Using standard polystyrene of a known molecular weight (mono-dispersed polystyrene, a product of Toyo Soda Mfg. Co., Ltd., Japan), the molecular weight M of the polystyrene sample and its GPC (gel permeation chromatography) count are measured. A calibration curve for the molecular weight M and the EV (elution volume) is drawn.

(2) A gel permeation chromatogram of the sample is taken by the GPC measuring method, and the number average molecular weight

$$(Mn=\frac{\Sigma MiNi}{\Sigma Ni})$$

and the weight average molecular weight

$$(Mw=\frac{\Sigma Mi^2Ni}{\Sigma MiNi})$$

are calculated for polymer by (1) above, and the $\overline{M}w/\overline{M}n$ is determined.

The sample is prepared under the following conditions, and the conditions for GPC are as shown below.

Preparation of the sample

(a) The polymer is taken into an Erlenmeyer flask together with o-dichlorobenzene so as to provide 15 mg-polymer/20 ml solvent solution.

(b) Into the Erlenmeyer flask containing the sample is added 0.1% by weight, based on the polymer solution, of 2,6-di-tert.-butyl-p-cresol as an anti-oxidant.

(c) The Erlenmeyer is maintained at 140°C for one hour and then the contents are stirred for about one hour to dissolve the polymer and the antioxidant.

(d) Then, at 135 to 140°C, the solution is filtered by a Millipore filter of 0.5 μ in an opening size.

(e) The filtrate is subjected to gel permeation chromatography.

Conditions for gel permeation chromatography

(a) Device: Model 150°C, made by Waters Company

(b) Column: GSK GMH-6 (6 mmφ×600 mm) made by Toyo Soda Mfg. Co., Ltd.

(c) Amount of the sample: 400 μl

(d) Temperature: 135°C

(e) Flow rate: 1 ml/min.

The isotacticity value is triadtacticity determined from $^{13}$C-NMR (500 MHz) using the signal of carbon of the methine group of 1-butene. In the case of a copolymer of 1-butene with another olefin, the methine group of the 1-butene adjacent to the other olefin is excluded in determining its triadtacticity.

The specific procedure of measuring the isotacticity value is as follows:

Preparation of a sample

(a) The polymer is taken into an NMR measuring sample tube having a diameter of 10 mm together with hexachlorobutadiene as a solvent so as to provide a 200 mg-polymer/1.5 ml solvent solution.

(b) The sample tube is left to stand at 120°C for 12 hours, and then further maintained at about 250°C for 2 to 3 minutes to dissolve the polymer completely and uniformly.

(c) The solution was further left to stand at 120°C for 1 to 2 hours.

The measurement was made on the sample so prepared.

Conditions for measurement

(a) Device: 500 MHZ FT-NMR (made by Nippon Denshi K.K.)

(b) Measuring temperature: 120°C.

The 1-butene polymer of the invention meets the combination of parameters (1) to (3). To the best of the knowledge of the present inventors, no 1-butene polymer has been known which meets these parameters in combination. The 1-butene polymers previously used for providing shaped articles, particularly pipe structures, have an intrinsic viscosity [η] of about 2.5 to about 4.8 dl/g and a $\overline{M}w/\overline{M}n$ ratio of about 6 to about 12 and an isotacticity value of not more than 94.

The 1-butene polymer of the invention can be shaped into pipe structures of the desired shape and size by utilizing melt-shaping methods known *per se*. For example, the 1-butene polymer of the invention can be shaped, with or without additives of the types and amounts which do not substantially affect the excellent properties of the polymer, into pipe structures of the desired shape and size by a known melt-shaping method, for example melt-extrusion, and cooling the shaped article. Any suitable method can be selected for the above shaping and cooling. For example, a pipe structure may be produced by melting

3

the polymer in an extruder, shaping it into a pipe by means of a straight head die, a crosshead die, an offset die, or the like, and cooling the pipe with cooling air, cooling water, etc. while restricting its outside diameter by a sizing plate method, an outside mandrel method, a sizing box method, a inside mandrel method, etc.

The melt-shaping conditions and cooling conditions can be suitably selected. For example, the melt-shaping is carried out at a temperature of about 180 to about 250°C under an extruding pressure of about 70 to about 130 kg/cm$^2$, and the cooling may be carried out at a temperature of 0 to about 30°C.

The additives which may be incorporated in the molding 1-butene polymers as required may be those additives which are normally used for polyolefins. They include, for example, weatherability stabilizers, heat stabilizers, lubricant and slip agents, antiblocking agents, nucleating agents, pigments and dyes, antihaze agents, HCl absorbers and inorganic and organic fillers.

Specific examples of these additives include heat-stabilizers of the phenol, sulfur, amine or phosphorus type, such as p - hydroxyanisole, 3 - methyl - 4 - isopropyl phenol, ascorbic acid, 2 - tert - butyl - 4,6 - dimethyl phenol, 2,6 - di - tert - butyl phenol, propyl gallate, styrenated mixed cresol, 2 - (1 - methyl cyclohexyl) - 4,6 - dimethyl phenol, 2,4 - di - tert - butyl - 5 - methyl phenol, 3,5 - di - tert - butyl - 4 - hydroxy toluene, 2,5 - di - tert - butyl - 4 - hydroxy phenol, 4 - hydroxymethyl - 2,6 - di - tert - butyl phenol, 2,4,6 - tri - tert - butyl phenol, 2,6 - di - tert - butyl - α - dimethylamino - p - cresol, 1,1 - bis - (4 - hydroxy phenyl) cyclohexane, octyl gallate, nordihydroguaiaretic acid, dodecyl gallate, butylated bisphenol A, 4,4' - methylene - bis(2 - tert - butyl - 6 - methyl phenol), 2,2' - methylene - bis(4 - methyl - 6 - tert - butyl phenol), 4,4' - thio - bis(2 - methyl - 6 - tert - butyl phenol), 4,4' - thio - bis(3 - methyl - 6 - tert - butyl phenol), 2,2' - thio - bis(4 - methyl - 6 - tert - butyl phenol), 2,2' - methylene - bis(4 - ethyl - 6 - tert - butyl phenol), n - stearoyl - p - amino - phenol, 4,4' - butylidene - bis(6 - tert - butyl - m - cresol), bis(3 - methyl - 4 - hydroxy - 5 - tert - butylbenzyl)sulfide, 2,2' - methylene - bis(4 - methyl - 6 - cyclohexyl phenol), 4,4' - bis(2,6 - di - tert - butyl phenol), 2,2' - dihydroxy - 3,3' - di - (α - methylcyclohexyl) - 5,5' - dimethyl dimethyl diphenyl methane, 4,4' - methylene - bis(2,6 - di - tert - butyl phenol), d,l - α - tecopherol, 2,2' - methylene - bis(6 - α - methylbenzyl - p - cresol), 2,6 - bis(2' - hydroxy - 3' - tert - butyl - 5' - methylbenzyl) - 4 - methyl phenol, n-octadecyl - 3 - (4' - hydroxy - 3',5' - di - tert - butyl phenyl)propionate, 1,1,3 - tris(2 - methyl - 4 - hydroxy - 5 - tert - butyl phenyl)butane, 4,4' - butylidene - bis(3 - methyl - tert - butyl phenol), 6 - (4 - hydroxy - 3,5 - di - tert - butylanilino) - 2,4 - bis - (octylthio) - 1,3,5 - triazine, 2,4 - bis(4 - hydroxy - 3,5 - di - tert - butylanilino) - 6 - (n - octylthio) - 1,3,5 - triazine, 1,3,5 - tris(4 - tert - butyl - 3 - hydroxy - 2,6 - dimethylbenzyl) - s - triazine - 2,4,6 - (1H,3H,5H) - trione, tris(3,5 - di - tert - butyl - 4 - hydroxy)phosphate, 1,3,5 - trimethyl - 2,4,6 - tris(3,5 - di - tert - butyl - 4 - hydroxyphenyl)benzyl benzene, 1,3,5 - tris(3',5' - di - tert - butyl - 4' - hydroxybenzyl) - s - triazine - 2,4,6 - (1H,3H,5H) - trione, di - stearyl(4 - hydroxy - 3 - methyl - 5 - tert - butylbenzyl)malonate, ethyleneglycol - bis[3,3 - bis(3' - tert - butyl - 4' - hydroxyphenyl)]butyrate, tris[2 - tert - butyl - 4 - thio(2' - methyl - 4' - hydroxy - 5' - tert - butylphenyl) - 5 - methylphenyl]phosphite, tetrakis[methylene - 3 - (3,5 - di - tert - butyl - 4 - hydroxyphenyl)propionate]methane, phenol condensation products, hindered phenol derivative, 3,5 - di - tert - butyl - 4 - hydroxybenzyl phosphoric acid, di-stearyl ester, 2 - mercaptobenzimidazole, phenothiazine, N,N' - diphenylthiourea, tetramethyl thiuram disulfide, N - oxydiethylene - 2 - benzothiazolylsulfenamide, N - cyclohexyl - 2 - benzothiazolylsulfenamide, cyclohexylamine salt of 2 - mercaptobenzothiazole, N,N - diisopropyl - 2 - benzothiazelylsulfenamide, 2 - N,N - diethylthio carbamol thio)benzothiazole, tetraethylthiuram disulfide, dibenzothiazyl disulfide, zinc diethyldithiocarbamate, zinc ethylphenyldithiocarbamate, zinc di - n - butyldithiocarbamate, dilauyl thiodipropionate, dilauyl thiodi - 1 - 1' - methylbutyrate, dimyristyl - 3,3' - thiodipropionate, lauryl stearylthiodipropionate, distearyl thiodipropionate, distearyl thiodibutyrate, penta(erythryl - tetra - β - mercaptolauryl)propionate, phenyl - α-naphthylamine, phenyl - β - naphthyl amine, oxanilide, hydrazine derivatives, 9,10 - dihydro - 9 - oxa - 10 - phosphenanthrene - 10 - oxide, triphenyl phosphite, 2 - ethylhexyl acid phosphate, dilauryl phosphite, tri - iso - octyl phosphite, tris(2,4 - di - tert - butyl phenyl) phosphite, trilauryl phosphite, trilauryl di - thiophosphite, trilauryl trithiophosphite, trinonylphenyl phosphite, distearyl pentaerythritol diphosphite, tris(mixed mono and dinonyl phenyl) phosphite, trioctadecyl phosphite, 1,1,3 - tris(2 - methyl - 4 - di - tridecyl phosphite - 5 - tert butylphenyl)butane and diphenyl phosphite, 4,4' - butylidene - bis(3 - methyl - 6 - butyl)tridecyl phosphite, and 4,4' - butylidene - bis(3 - methyl - 6 - tert - butylphenyl - ditridecyl)phosphite, weatherability stabilizers such as 2,4 - dihydroxybenzophenone, 2 - hydroxy - 5 - chlorobenzophenone, 2 - (2' - hydroxy - 5' - methyl phenyl)benzotriazole, 2 - hydroxy - 4 - methoxybenzophenone, 2,2' - dihydroxy - 4 - methoxybenzophenone, 2,2',4,4' - tetrahydroxybenzophenone, 2 - hydroxy - 4 - methoxy - 4' - chlorobenzophenone, p - tert - butylphenyl salicylate, 2,2' - dihydroxy - 4,4' - dimethoxybenzophenone, ethyl - 2 - cyano - 3,3 - diphenyl acrylate 2 - hydroxy - 4 - benzyloxybenzophenone, 2 - (2' - hydroxy - 3' - tert - butyl - 5' - methyl phenyl) - 5 - chloro benzotriazole, 2 - (2' - hydroxy - 3',5' - di - tert - butyl phenyl)benzotriazole, 2 - (2' - hydroxy - 4' - tert - octoxy phenyl)benzotriazole, p - octyl phenyl salicylate, 2 - hydroxy - 4 - n - octoxybenzophenone, 2,2' - dihydroxy - 4 - n - octoxybenzophenone, 2 - (2' - hydroxy - 4' - octoxy phenyl)benzotriazole, 2 - (2' - hydroxy - 3' - tert - butyl - 5' - hexyl phenyl)benzotriazole, 2 - (2' - hydroxy - 3' - tert - butyl - 5' - hexyl phenyl)benzotriazole, 2 - (2' - hydroxy - 3',5' - di - tert - butyl phenyl) - 5 - chlorobenzotriazole, 2 - ethyl - 2' - ethoxy - 5' - tert - butyl - N,N' - diphenyl oxamide,

4

2,4 - di - tert - butyl phenyl - 3,5 - di - tert - butyl - 4 - hydroxy benzoate, 3,5 - di - tert - butyl - 4 - hydroxy myristyl benzoate, bis - (2,2',6,6' - tetramethyl - 4 - piperidine)sebacate, [2,2' - thio - bis(4 - tert - octyl phenolate)] - tertbutylamino nickel (II), nickel salt of bis(3,5 - di - tert - butyl - 4 - hydroxybenzoyl phosphoric acid mono ethyl ester, nickel salt of bis(3,5 - di - tert - butyl - 4 - hydroxybenzoyl phosphoric acid mono octyl ester, nickel salt of 2,2' - thiobis - (4,4' - alkylphenol), dimethyl succinate[2 - (4 - hydroxy - 2,2,6,6 - tetramethyl - 1 - piperizyl)ethanol]polycondensate, poly[{6 - (1,1,3,3 - tetramethylbutyl)imino} - 1,3,5 - triazine - 2,4 - diyll{4 - (2,2,6,6 - tetramethyl piperizyl)imino}hexamethylene], and 2 - hydroxy - 4 - dodecyloxy, benzophenone; aliphatic hydrocarbons such as paraffin wax, polyethylene wax and polypropylene wax, higher fatty acids such as capric acid, lauric acid, myristic acid, palmitic acid, margaric acid, stearic acid, arachidic acid and behenic acid; metal salts of the higher fatty acids such as the lithium, calcium, sodium, magnesium and potassium salts, aliphatic alcohols such as palmityl alcohol, cetyl alcohol and stearyl alcohol, aliphatic amides such as capramide, caprylamide, capric amide, lauric amide, myristic amide, palmitic amide, stearamide, esters between fatty acids and alcohols, and fluorine-containing compounds such as fluoroalkylcarboxylic acids or the metal salts thereof, and fluoroalkylsulfonic acids or the metal salts thereof; antiblocking agents such as silica, talc, clay and diatomaceous earth; antistatic agents such as lauryldiethanolamine, dioxyethylene laurylamine, N,N - bis(2 - hydroxyethyl)stearylamine, stearyl monoglyceride, sodium ditridecyl sulfosuccinate, sorbitan fatty esters, a mixture of an N,N - bis(2 - hydroxyethyl)alkylamine and an n-alkyl alcohol silicate, polyoxyethylene laurylamine, and stearyl diethanolamine monostearate; anti-haze agents such as glyceric acid esters, sorbitan acid esters, acrylsarcosines, polyoxyethylene glycerine monostearate and diethanolamide; coloring agents such as titanium dioxide, calcium carbonate, carbon black, lead sub-oxide, cadmium red, vermillion, red iron oxide, brown iron oxide, barium yellow, titanium yellow, viridian, ultramarine, cobalt blue, coblat violet, azo pigments, nitroso lake pigments, nitro lake pigments, basic dye lakes, phthalocyanine pigments, organic fluorescent pigments and pearl essence; inorganic or organic fillers such as calcium carbonate, clay, talc, silica, diatomaceous earth, siliceous sand, mica powder, slate flour, alumina white, wood flour, hard rubber dust and cellulose powder; HCl absorbers such as calcium oxide, lithium stearate, sodium stearate, an epoxidation product of octyl stearate, hydrotalcite, calcium stearate, zinc stearate and calcium 12-hydroxystearate; and nucleating agents such as organic carboxylic acids or the metal salts thereof and benzylidene sorbitol or the derivatives thereof.

The amounts of these additives may be properly chosen so long as they do not substantially affect the excellent properties of the 1-butene polymer. For examples, the amounts may be about 0.05 to about 0.5% by weight for the weatherability stabilizers, to about 0.05 to about 0.5% by weight for the heat stabilizers, about 0.05 to about 2% by weight for the slip agents or lubricants, about 0.05 to about 1% by weight for the nucleating agents, about 0.1 to about 2% by weight for the coloring agents, about 0.01 to about 0.5% by weight for the antiblocking agents, about 0.1 to about 2% by weight for the antihaze agents, about 0.1 to about 2% by weight for the antistatic agents, and about 0.1 to about 2% by weight for the fillers, all based on the weight of the 1-butene polymer.

The 1-butene polymer of this invention suitable for production of shaped articles, particularly pipe structures can be produced by using a selected catalyst. For example, it can be prepared by polymerizing 1-butene or copolymerizing 1-butene with up to 1 mole % of an olefin with 2 to 12 carbon atoms other than 1-butene in the presence of a catalyst composed of (A) a solid highly active titanium catalyst component, (B) a trialkyl aluminum compound and (C) at least one organosilicon compound selected from the group consisting of triethylmethoxysilane, triethylethoxysilane, tripropylmethoxysilane, methyltriethoxysilane, ethyltriethoxysilane, vinyltriethoxysilane, n - propyltriethoxysilane, phenyltriethoxysilane and tetraethoxysilane.

The solid highly active titanium catalyst component (A) that can be used in this invention contains magnesium, titanium, halogen and a diester of a dicarboxylic acid as essential components.

The titanium catalyst component (A) desirably has a magnesium/titanium atomic ratio of from about 2 to about 100, preferably from about 4 to about 70, a halogen/titanium atomic ratio of from about 4 to about 100, preferably from about 6 to about 40, and a diester/titanium mole ratio of from about 0.2 to about 10, preferably from about 0.4 to about 6. The specific surface area of the titanium catalyst component (A) is preferably at least about 3 m²/g, more preferably at least about 40 m²/g, especially preferably about 100 m²/g to about 800 m²/g.

Usually, the titanium catalyst component (A) does not substantially liberate a titanium compound when treated by a simple means such as washing with hexane at room temperature.

The X-ray spectrum of the titanium catalyst component (A) shows that irrespective of the starting magnesium compound used for its preparation, it shows an amorphous nature with regard to the magnesium compound or it is much more amorphous than a usual commercially available magnesium dihalide.

In addition to the aforesaid essential components, the titanium catalyst component (A) may further include other elements, metals, functional groups, electron donors, etc. to an extent that they do not adversely affect the performance of the catalyst. Or the component (A) may be diluted with an organic or inorganic diluent.

The titanium catalyst component (A) may be prepared by contacting a magnesium compound (or metallic magnesium), a titanium compound and a diester or a compound capable of forming a diester with one another with or without using another reagent in accordance with the same method of preparing known highly active titanium catalyst components, which are disclosed, for example, in British Patent Specifications Nos. 1492618, 1554340 and 1554248 and U.S. Patent Nos. 4157435, 4076924, 4085276, 4250285, 4232139, 4143223, 4315874, 4330649, 4401589 and 4335015 and European Patent Specification No. 22675.

Some examples of the procedure of producing the titanium catalyst component (A) are summarized below.

(1) A magnesium compound or a complex of a magnesium compound and an electron donor is pretreated or not-pretreated with an electron donor and/or a reaction aid such as an organoaluminum compound or a halogen-containing silicon compound in the presence or absence of an electron donor or a pulverization aid with or without pulverization. The resulting solid is reacted with a titanium compound which is in the liquid state under the reaction conditions. In the above procedure, a diester of a dicarboxylic acid or a compound capable of forming the diester is used at least once as the electron donor.

(2) A magnesium compound in the liquid state having no reducing ability is reacted with a titanium compound in the liquid state in the presence of a diester of a dicarboxylic acid or a compound capable of forming the diester to precipitate a solid titanium complex.

(3) The product obtained in (2) above is further reacted with a titanium compound.

(4) The product obtained in (1) or (2) is further reacted with a titanium compound and as an electron donor, a diester of a dicarboxylic acid or a compound capable of forming the diester.

(5) A magnesium compound or a complex of a magnesium compound and an electron donor is pulverized in the presence of a titanium compound and in the presence or absence of an electron donor and a pulverization aid, and with or without pre-treatment with an electron donor and/or a reaction aid such as an organoaluminum compound or a halogen-containing silicon compound, treated with a halogen, a halogen compound or an aromatic hydrocarbon. In the above procedure, a diester of a dicarboxylic acid or a compound capable of forming the diester is used at least once as the electron donor.

Preferred among these methods are those in which a liquid titanium halide is used, or a halogenated hydrocarbon is used after or during the use of the titanium compound.

The electron donor used in the above methods of preparation is not necessarily limited to the diester or diester-forming compound. There may be used other electron donors such as alcohols, phenols, aldehydes, ketones, ethers, carboxylic acids, carboxylic acid anhydrides, carboxylic acid esters, monoesters and amines. It is essential however that the diester of a dicarboxylic acid or the diester-forming compound be used at least once.

Preferred examples of the diester as an essential component of the solid highly active titanium catalyst component (A) used in this invention include diesters of dicarboxylic acids in which two carboxyl groups are attached to one carbon atom of the hydrocarbon moiety or dicarboxylic acids in which one carboxyl group is attached to each of the two adjoining carbon atoms of the hydrocarbon moiety, and diesters of dicarboxylic acids in which one carboxyl group is attached to each of the two adjoining carbon atoms of the heterocyclic compound moiety containing at least two carbon atoms.

More specific examples of the preferred diesters are diesters, preferably di($C_1$—$C_{20}$)alkyl esters in which the two alkyl groups may be identical or different, of dicarboxylic acids in which two carboxyl groups are attached to one carbon atom of an aliphatic hydrocarbon moiety having 1 to 20 carbon atoms or dicarboxylic acids in which one carboxyl group is attached to each of the two adjoining carbon atoms of an aliphatic hydrocarbon moiety having 2 to 20 carbon atoms; diesters, preferably di($C_1$—$C_{20}$)alkyl esters in which the two alkyl esters may be identical or different, of dicarboxylic acids in which two carboxyl groups are attached to one carbon atom of an alicyclic hydrocarbon moiety having 3 to 20 carbon atoms or dicarboxylic acids in which one carboxyl group is attached to each of the two adjoining carbon atoms of the aforesaid alicyclic hydrocarbon moiety; diesters, preferably di($C_1$—$C_{20}$)alkyl esters in which the two alkyl groups may be identical or different, of dicarboxylic acids in which one carboxyl group is attached to each of the adjoining carbon atoms (at the ortho-position) of an aromatic hydrocarbon moiety having 6 to 20 carbon atoms; and diesters, preferably di($C_1$—$C_{20}$)alkyl esters, of dicarboxylic acids in which one carboxyl group is attached to each of the two adjoining carbon atoms of a heterocyclic compound moiety containing at least two carbon atoms and 1 to 10 hetero atoms selected from the group consisting of O, N and S atoms.

Specific examples of the dicarboxylic acids exemplified above include malonic acid; substituted malonic acids such as methylmalonic acid, ethylmalonic acid, isopropylmalonic acid, allylmalonic acid, and phenylmalonic acid; succinic acid; substituted succinic acids such as methylsuccinic acid, dimethylsuccinic acid, ethylsuccinic acid, methylethylsuccinic acid and itaconic acid; maleic acid; substituted maleic acids such as citraconic acid and dimethylmaleic acid; fumaric acid; substituted fumaric acid such as methylfumaric acid and ethylfumaric acid; alicyclic dicarboxylic acids such as cyclopentane - 1,1 - dicarboxylic acid, cyclopentane - 1,2 - dicarboxylic acid, cyclohexane - 1,2 - dicarboxylic acid, cyclohexene - 1,2 - dicarboxylic acid, cyclohexene - 2,3 - dicarboxylic acid, cyclohexene - 3,4 - dicarboxylic acid, cyclohexene - 4,5 - dicarboxylic acid, Nadic Acid, Methylnadic Acid, and 1 - allylcyclohexane - 3,4 - dicarboxylic acid; aromatic dicarboxylic acids such as phthalic acid, naphthalene - 1,2 - dicarboxylic acid and naphthalene - 2,3 - dicarboxylic acid; and heterocyclic dicarboxylic acids such as furane - 3,4 - dicarboxylic acid, 4,5 - dihydrofurane - 2,3 - dicarboxylic acid, benzopyran - 3,4 - dicarboxylic acid, pyrrole - 2,3 - dicarboxylic acid, pyridine - 2,3 - dicarboxylic acid, thiophene - 3,4 - dicarboxylic acid, and indole - 2,3 - dicarboxylic acid.

Preferably, at least one of the alcohol components of the dicarboxylic acid diesters exemplified above has at least 2 carbon atoms, for example 2 to 20 carbon atoms, especially at least 3 carbon atoms. It is above all preferred that both of the alcohol components have at least 2 carbon atoms, especially at least 3 carbon atoms. Examples include the diethyl esters, diisopropyl esters, di-n-propyl esters, di-n-butyl esters, diisobutyl esters, di-tert-butyl esters, diisoamyl esters, di-n-hexyl esters, di-2-ethylhexyl esters, di-n-octyl esters, diisodecyl esters, and ethyl-n-butyl esters of the above-exemplified dicarboxylic acids.

A magnesium compound having no reducing ability can be utilized in the preparation of the solid highly active titanium catalyst component (A).

The magnesium compound includes, for example, magnesium halides such as magnesium chloride, magnesium bromide, magnesium iodide and magnesium fluoride; $C_1$—$C_{20}$ alkoxymagnesium halides such as methoxymagnesium chloride, ethoxy magnesium chloride, isopropoxymagnesium chloride, butoxy-magnesium chloride and octoxymagnesium chloride; $C_6$—$C_{20}$ aryloxymagnesium halides such as phenoxymagnesium chloride and methylphenoxymagnesium chloride; $C_1$—$C_{20}$ alkoxymagnesiums such as ethoxy magnesium, isopropoxy magnesium, butoxy magnesium, n-octoxy magnesium, and 2-ethylhexoxy magnesium; $C_6$—$C_{20}$ aryloxy magnesium such as phenoxy magnesium and dimethylphenoxy magnesium; and carboxylic acid salts of magnesium such as magnesium laurate and magnesium stearate.

Preferred are halogen-containing magnesium compounds, particularly, magnesium chloride, alkoxy magnesium chlorides and aryloxymagnesium chlorides are preferred.

Suitable titanium compounds used to prepare the titanium catalyst component (A) are tetravalent titanium compounds represented by $Ti(OR)_gX_{4-g}$ in which R is a hydrocarbon group, X is halogen and g is 0 to 4. Examples of R are alkyl groups having 1 to 6 carbon atoms. Examples of X are Cl, Br and I.

Specific examples of such titanium compounds include titanium tetrahalides such as $TiCl_4$, $TiBr_4$ and $TiI_4$; alkoxytitanium trihalides such as $Ti(OCH_3)Cl_3$, $Ti(OC_2H_5)Cl_3$, $Ti(O$ n-$C_4H_9)Cl_3$, $Ti(OC_2H_5)Br_3$ and $Ti(O$ iso-$C_4H_9)Br_3$; alkoxytitanium dihalides such as $Ti(OCH_3)_2Cl_2$, $Ti(OC_2H_5)_2Cl_2$, $Ti(O$ n-$C_4H_9)_2Cl_2$ and $Ti(OC_2H_5)_2Br_2$; trialkoxytitanium monohalides such as $Ti(OCH_3)_3Cl$, $Ti(OC_2H_5)_3Cl$, $Ti(O$ n-$C_4H_9)_3Cl$ and $Ti(OC_2H_5)_3Br$; and tetraalkoxytitaniums such as $Ti(OCH_3)_4$, $Ti(OC_2H_5)_4$ and $Ti(O$ n-$C_4H_9)_4$. Among them, the halogen-containing titanium compounds, particularly titanium tetrahalides, especially preferably titanium tetrachloride, are preferred. These titanium compounds may be used singly or as a mixture. Or they may be used as diluted in hydrocarbons or halogenated hydrocarbons.

In the preparation of the titanium catalyst component (A), the amounts of the titanium compound, the magnesium compound the electron donor to be supported, and the other electron donors such as alcohols, phenols, monocarboxylic acid esters, the silicon compound and the aluminum compound which may be used as required differ depending upon the method of preparation and cannot be defined in a general manner. For example, about 0.1 to about 10 moles of the electron donor to be supported and about 0.05 mole to about 1000 moles of the titanium compound may be used per mole of the magnesium compound.

The catalyst composed of (A) the titanium catalyst component that can be obtained as above, (B) a trialkyl aluminum compound and (C) an organosilicon compound selected from the group stated hereinabove can be utilized in producing the 1-butene polymer in accordance with this invention.

Examples of preferred trialkyl aluminum compounds (B) are triethyl aluminum and triisobutyl aluminum.

The polymerization or copolymerization of 1-butene can be carried out in the liquid phase. An inert solvent such as hexane, heptane and kerosene may be used as a reaction medium, but 1-butene itself may be used as a reaction solvent. The amount of the catalyst used is preferably such that per liter of the volume of the reaction zone, the compound (A) is used in an amount of about 0.0001 to about 1.0 millimole calculated as titanium atom; the component (B) is used in such an amount that the proportion of the metal atom in component (B) is about 1 to about 2000 moles, preferably about 5 to about 500 moles, per mole of the titanium atom in the component (A); and the component (C) is used in such an amount that the proportion of the Si atom in component (C) is about 0.001 to about 10 moles, preferably about 0.01 to about 2 moles, especially preferably about 0.05 to about 1 mole, per mole of the metal atom in component (B).

The catalyst components (A), (B) and (C) may be contacted during or before the polymerization. In contacting them before the polymerization, only two of them selected may be contacted, or portions of two or three of them may be contacted. The contacting of the components before the polymerization may be carried out in an inert gaseous atmosphere, or in an atmosphere of 1-butene.

The polymerization temperature is preferably about 20 to about 200°C, more preferably about 50 to about 180°C, and the polymerization pressure is from atmospheric pressure to about 100 kg/cm², preferably about 2 to about 50 kg/cm².

The intrinsic viscosity of the polymer can be controlled to some extent by changing the polymerization conditions such as the polymerization temperature and the proportions of the catalyst components. Most effectively, this can be achieved by adding hydrogen to the polymerization system.

Pipes produced from the 1-butene polymer of this invention have improved rigidity, creep resistance characteristics and impact strength than conventional pipes of 1-butene resins. Furthermore, since the crystal transition speed of the 1-butene polymer of this invention is increased, shaped products immediately after shaping can be advantageously handled.

7

The following examples illustrate the present invention more specifically.

Example 1
Preparation of a titanium catalyst component (A)

Anhydrous magnesium chloride (4.76 g; 50 mmoles), 25 ml of decane and 23.4 ml (150 mmoles) of 2-ethylhexyl alcohol were heated at 130°C for 2 hours to form a uniform solution. To the solution was added 1.11 g (7.5 mmoles) of phthalic anhydride, and the mixture was stirred at 130°C for 1 hour to dissolve phthalic anhydride in the uniform solution. The resulting uniform solution was cooled to room temperature, and added dropwise over the course of 1 hour to 200 ml (1.8 moles) of titanium tetrachloride kept at −20°C. After the addition, the temperature of the mixture was raised to 110°C over the course of 4 hours. When its temperature reached 110°C, 2.68 ml (12.5 mmoles) of diisobutyl phthalate was added, and the mixture was maintained at this temperature for 2 hours with stirring. After the 2-hour reaction, the solid portion was collected by hot filtration. The solid portion was again suspended in 200 ml of titanium tetrachloride, and again reacted at 110°C for 2 hours. After the reaction, the solid portion was collected again by hot filtration, and fully washed with decane and hexane at 110°C until no free titanium compound was detected from the washings. The titanium catalyst component (A) prepared by the foregoing procedure was stored as a hexane slurry. A part of it, however, was dried for determining its composition. It was found that the titanium catalyst component (A) formed contained 3.1% by weight of titanium, 56.0% by weight of chlorine, 17.0% by weight of magnesium and 20.9% by weight of diisobutyl phthalate.

Polymerization

A 2-liter autoclave was cooled to below 50°C, and 1 liter of liquid 1-butene, 1 mmole of triethyl aluminum, 0.05 mmole of vinyltriethoxysilane and 2 liters of hydrogen were introduced into the autoclave. The mixture was heated to 60°C, and then 0.01 mmole, calculated as titanium atom, of the titanium catalyst component (A) was added. The 1-butene was polymerized at 60°C for 1 hour. Then, methanol was added to step the polymerization, and the unreacted 1-butene was removed. The results of the polymerization are summarized in Table 1.

An antioxidant was added to the resulting polymer, and the mixture was kneaded and granulated by a single screw extruder with a screw diameter of 30 mm at a resin temperature of 230°C, and press-formed at 200°C into a sheet having a thickness of 1 mm.

The sheet was tested for the following properties.

Tensile stress at yield point (kg/cm$^2$)
Measured in accordance with ASTM D 638 using an ASTM No. 4 dumbbell specimen.

Izod impact strength (kg-cm/cm)
A notch was provided in the sample, and its impact strength was measured in accordance with ASTM D 256.

Creep resistance (hours)
Tensile creep was evaluated in accordance with ASTM D 2990. The sample was an ASTM No. 4 dumbbell specimen. The testing temperature was 100°C, and the load was 20 kg. The time which elapsed until the specimen was broken, or stretched 25% was measured.

50% Transition time (hours)
By X-ray diffraction, the ratio of the (110) plane reflection peak intensity of the I-type crystals to the (200) plane reflection peak intensity of the II-type crystals was measured. The time required until the intensity ratio reached one-half of the saturated value of the intensity ratio with the lapse of time was measured.

Example 2
Example 1 was repeated except that the amount of hydrogen used in the polymerization was changed to 1 liter. The results are summarized in Tables 1 and 2.

Example 3
Example 1 was repeated except that in the polymerization, the amount of vinyltriethoxysilane was changed to 0.1 mmole, and the amount of hydrogen, to 0.7 liter. The results are summarized in Tables 1 and 2.

Example 4
Example 1 was repeated except that in the polymerization, the amount of vinyltriethoxysilane was changed to 1 mmole. The results are summarized in Tables 1 and 2.

Comparative Example 1
Example 1 was repeated except that in the polymerization, the amount of vinyltriethoxysilane was

8

changed to 0.1 mmole, and the amount of hydrogen, to 0.5 liter. The results are summarized in Tables 1 and 2.

Comparative Example 2

A 2-liter autoclave was cooled to below −50°C, and 1 liter of liquid 1-butene, 2 mmoles of diethyl aluminum chloride, and 0.3 liter of hydrogen were added. After heating the mixture to 50°C, 1 mmole of titanium trichloride was added. The 1-butene was polymerized at 50°C for 1 hour. Then, methanol was added to stop the polymerization, and the unreacted 1-butene was removed. The polymer was shaped and evaluated as in Example 1. The results are summarized in Tables 1 and 2.

Comparative Example 3

Example 1 was repeated except that the amount of hydrogen used in the polymerization was changed to 8 liters. The results are summarized in Tables 1 and 2.

Comparative Example 4

Comparative Example 2 was repeated except that the amount of hydrogen was changed to 0.4 liter, and the polymerization was carried out at 60°C. The results are summarized in Tables 1 and 2.

TABLE 1

| Example (Ex.) or Comparative Example (CEx.) | $[\eta]^{(1)}$ (dl/g) | $\bar{M}w/\bar{M}n$ | Isotactivity (%) |
|---|---|---|---|
| Ex. 1 | 1.9 | 4.7 | 95.8 |
| Ex. 2 | 3.0 | 4.0 | 96.2 |
| Ex. 3 | 3.5 | 3.9 | 97.0 |
| Ex. 4 | 2.4 | 4.2 | 99.0 |
| CEx. 1 | 4.3 | 5.1 | 96.9 |
| CEx. 2 | 4.4 | 8.0 | 93.7 |
| CEx. 3 | 0.9 | 4.5 | 95.1 |
| CEx. 4 | 2.8 | 7.5 | 91.2 |

[1]Measured in decalin at 135°C.

TABLE 2

| Example (Ex.) or Comparative Example (CEx.) | Stress at yield point (kg/cm$^2$) | | Izod impact strength (kg-cm/cm) | Creep resistance (hours) | 50% Transition time (hours) |
|---|---|---|---|---|---|
| | After 1 day | After 10 days | | | |
| Ex. 1 | 151 | 215 | 6.5 | 4000 | 15 |
| Ex. 2 | 141 | 207 | 7.3 | 4400 | 25 |
| Ex. 3 | 135 | 201 | 7.5 | 4500 | 31 |
| Ex. 4 | 153 | 208 | 6.2 | 4900 | 18 |
| CEx. 1 | 100 | 163 | 7.6 | 4500 | 65 |
| CEx. 2 | 116 | 172 | 6.2 | 4000 | 35 |
| CEx. 3 | 155 | 220 | 4.0 | 3100 | 12 |
| CEx. 4 | 95 | 157 | 6.5 | 4200 | 53 |

**Claims for the Contracting States: DE, FR, GB, IT, NL**

1. A butene-1 polymer containing 0 to 1 mole % of an olefin with 2 to 20 carbon atoms other than 1-butene and having
    (1) an intrinsic viscosity $[\eta]$ of from 1.5 to 4.0 dl/g as measured in decalin at 135°C,
    (2) a molecular weight distribution, expressed by the ratio of its weight average molecular weight ($\bar{M}w$) to its number average molecular weight ($\bar{M}n$), of not more than 6, and
    (3) an isotacticity value of at least 95%.

2. A 1-butene polymer according to claim 1 which has a molecular weight distribution of from 2 to 5.5.

3. A 1-butene polymer according to claim 1 or 2 which has an isotacticity value of at least 95.5.

4. A shaped article in the form of a pipe structure of a 1-butene polymer as claimed in claim 1, 2 or 3.

5. Use of a 1-butene polymer as claimed in claim 1, 2 or 3 in the production of a shaped article in the form of a pipe structure.

**Claims for the Contracting State: AT**

1. A process for preparing a butene-1 polymer containing 0 to 1 mole % of an olefin with 2 to 20 carbon atoms other than 1-butene and having

(1) an intrinsic viscosity [η] of from 1.5 to 4.0 dl/g as measured in decalin at 135°C,

(2) a molecualr weight distribution, expressed by the ratio of its weight average molecular weight ($\overline{M}$w) to its number average molecular weight ($\overline{M}$n), of not more than 6, and

(3) an isotacticity value of at least 95%, which process comprises polymerizing 1-butene or copolymerizing 1-butene with up to 1 mole % of said other olefin in the presence of a catalyst composed of (A) a solid highly active titanium catalyst component, (B) a trialkyl aluminum compound and (C) at least one organosilicon compound selected from triethylmethoxysilane, triethylethoxysilane, tripropylmethoxysilane, methyltriethoxysilane, ethyltriethoxysilane, vinyltriethoxysilane, n - propyltriethoxysilane, phenyltriethoxysilane and tetraethoxysilane.

2. A shaped article in the form of a pipe structure of a 1-butene polymer as defined in claim 1.

3. Use of a 1-butene polymer as defined in claim 1 in the production of a shaped article in the form of a pipe structure.

**Patentansprüche für die Vertragsstaaten: DE, FR, GB, IT und NL**

1. Poly-1-buten enthaltend 0 bis 1 mol-% eines $C_2$- bis $C_{20}$-Olefins—außer 1-Buten—mit.

(1) einer Grundviskosität (η) von 1,5 bis 4,0 dl/g in Decalin bei 135°C,

(2) einer Molekulargewichtsverteilung $\overline{M}$w/$\overline{M}$n von nicht mehr also 6, wobei $\overline{M}$w das mittlere Molekulargewicht (Gewichtsmittel) und $\overline{M}$n das mittlere Molekulargewicht (Zahlenmittel) bedeuten, und

(3) einem Wert der Isotaktizität von zumindest 95%.

2. Poly-1-buten nach Anspruch 1 mit einer Molekulargewichtsverteilung von 2 bis 5,5.

3. Poly-1-buten nach Anspruch 1 oder mit einem Wert der Isotaktizität von zumindest 95,5.

4. Formkörper in Form einer Rohrleitung aus Poly-1-buten entsprechend den Ansprüche 1, 2 oder 3.

5. Verwendung des Poly-1-butens der Ansprüche 1, 2 oder 3 zur Herstellung von Formkörpern in Form einer Rohrleitung.

**Patentansprüche für der Vertragstaat: AT**

1. Verfahren zur Herstellung von Poly-1-buten enthaltend 0 bis 1 mol-% eines $C_2$- bis $C_{20}$-Olefins—außer 1-Buten—mit

(1) einer Grundviskosität (η) von 1,5 bis 4,0 dl/g in Decalin bei 135°C,

(2) einer Molekulargewichtsverteilung $\overline{M}$w/$\overline{M}$n von nicht mehr als 6, wobei $\overline{M}$w das mittlere Molekulargewicht (Gewichtsmittel) und $\overline{M}$n das mittlere Molekulargewicht (Zahlenmittel) ist und

(3) einem Wert der Isotaktizität von zumindest 95%,

indem 1-Buten polymerisiert oder copolymerisiert wird mit bis zu 1 mol-% des anderen Olefins in Gegenwart eines Katalysators, welcher

a) eine feste, hochaktive Titankatalysatorkomponente,

b) eine Trialkylaluminiumverbindung und

c) mindestens eines Organosiliciumverbindung in Form von Triethylmethoxysilan, Triethylethoxysilan, Tripropylmethoxysilan, Methyltriethoxysilan, Ethyltriethoxysilan, Vinyltriethoxysilan, n - Propyltriethoxysilan, Phenyltriethoxysilan und Tetraethoxysilan enthält.

2. Formkörper in Form einer Rohrleitung ais Poly-1-buten entsprechend Anspruch 1.

3. Verwendung des nach Anspruch 1 erhaltenen Poly-1-butens zur Herstellung eines Formkörpers in Form einer Rohrleitung.

**Revendications pour les Etats Contractants: DE, FR, GB, IT, NL**

1. Polymère à base de 1-butène, contenant de 0 à 1% en mole d'une oléfine à 2—20 atomes de carbone, autre que le 1-butène, et ayant

(1) une viscosité intrinsèque [η] de 1,5 à 4,0 dl/g, telle que mesurée dans de la décaline à 135°C,

(2) une distribution de masse moléculaire, exprimée par le rapport de sa masse moléculaire moyenne en poids ($\overline{M}$w) à sa masse moléculaire moyenne en nombre ($\overline{M}$n), n'excédant pas 6, et

(3) un indice d'isotacticité d'au moins 95%.

2. Polymère à base de 1-butène selon la revendication 1, ayant une distribution de masse moléculaire allant de 2 à 5,5.

3. Polymère à base de 1-butène solution la revendication 1 ou 2, ayant un indice d'isotacticité d'au moins 95,5.

4. Article façonné sous la forme d'une structure tubulaire, en un polymère à base de 1-butène selon la revendication 1, 2 ou 3.

5. Utilisation d'un polymère à base de 1-butène selon la revendication 1, 2 ou 3, dans la production d'un article façonné sous la forme d'une structure tubulaire.

**Revendications pour l'Etat Contractant: AT**

1. Procédé pour la préparation d'un polymère à base de 1-butène, contenant de 0 à 1% en mole d'une oléfine à 2—20 atomes de carbone, autre que le 1-butène, et ayant

(1) une viscosité intrinsèque $[\eta]$ de 1,5 à 4,0 dl/g, telle que mesurée dans de la décaline à 135°C,

(2) une distribution de masse moléculaire, exprimée par le rapport de sa masse moléculaire moyenne en poids ($\bar{M}w$) à sa masse moléculaire moyenne en nombre ($\bar{M}n$), n'excédant pas 6, et

(3) un indice d'isotacticité d'au moins 95%,

lequel procédé comprend la polymérisation de 1-butène ou la copolymérisation de 1-butène avec jusqu'à 1% en mole de ladite autre oléfine, en présence d'un catalyseur composé de (A) un composant catalytique solide hautement actif à base de titane, (B) un composé trialkylaluminium, et (C) au moins un composé organosilicié choisi parmi le triéthylméthoxysilane, le triéthyléthoxysilane, le tripropylméthoxysilane, le méthyltriéthoxysilane, l'éthyltriéthoxysilane, le vinyltriéthoxysilane, le n - propyltriéthoxysilane, le phényltriéthoxysilane et le tétraéthoxysilane.

2. Article façonné sous la forme d'une structure tubulaire, en un polymère à base de 1-butène tel que défini dans la revendication 1.

3. Utilisation d'un polymère à base de 1-butène tel que défini dans la revendication 1, dans la production d'un article façonné sous la forme d'une structure tubulaire.